# EUROPEAN PATENT APPLICATION

(11) **EP 1 298 870 A2**
(43) Date of publication of application: **02.04.2003**
(21) Application number: 02015799.6
(22) Date of filing: 15.07.2002
(51) Int. Cl.: H04L 12/58, H04L 29/06, G06F 13/00

(54) **Methods for intersystem communication and program for computers and interface modules**

(30) Priority: 26.09.2001 JP 2001294123
(71) Applicant: Toyota Caelum Incorporated, Nagoya-shi, Aichi-ken, 460-0008 (JP)
(72) Inventor: Kawai, Motomasa, Naka-ku, Nagoya-shi, Aichi-ken, 460-0008 (JP)
(74) Representative: Winter, Brandl, Fürniss, Hübner, Röss, Kaiser, Polte Partnerschaft

(57) **Abstract**

The communication between applications (5A, 6A) included in two computers (5, 6) respectively provided in intranets (IntA, IntB) protected from the Internet (2) by firewalls (3, 4) is performed via the Internet (2). An interface (5B, 6B) is stored in the computer (5, 6) as a communication tool. An intersystem communication is performed by an electronic mail via the interface (5B, 6B). The interface (5B, 6B) includes a mail transmission function, a mail monitoring function, an encryption function, a decryption function, and a mail decode function.

## Description

### BACKGROUND OF THE INVENTION

### 1. Field of Invention

This invention relates to intersystem communication methods, and computers and interface module programs. Moreover, the present invention pertains to an intersystem communication methods, and computers and interface module programs for performing communication between applications (i.e., systems) carried out by a plurality of computers via the Internet.

### 2. Description of Related Art

Programs using languages such as Java (R) have been available as methods for interfacing between a server and a client using the Internet. To use those known programs, the server is required to be placed outside of an intranet (i.e., outside of firewall) in which a backbone database is placed. Thus, the known method includes drawbacks in security protection because the information in the server may be damaged and stolen by the hacking from the outside. Because of these drawbacks, the servers for storing important information of companies and institutions must be placed in the intranet to improve security protection.

On the other hand, some clients (i.e., terminal) that communicate with the server having the database are permitted to use the important information of the companies, the institutions, and the like. For example, when a predetermined transaction is performed by the client, a distributed processing for mitigating the transaction load of the client may be constructed. Thus, by requesting that the server having the database performs a part of the transaction, the information which has been calculated in the server can be sent to the client.

With respect to the foregoing, the backbone database for storing the data necessary for the security protection, such as data of research institutions, plan drawing data of a manufacturer, and deposit data of banks, and the server for dealing with the backbone database has been placed in the intranet. However, in order to protect the proprietary information, another server for establishing the communication with the server in the intranet via the firewall is provided outside of the intranet for performing the communication between both the servers within the intranet and outside of the intranet.

Notwithstanding, according to the foregoing methods, massive equipment and systems (i.e., programs) must be constructed for the security protection, for example, providing a plurality of personal computers. Thus, the cost for including the equipment is considerably high in the known methods.

### SUMMARY OF THE INVENTION

Accordingly, the present invention obviates the foregoing drawbacks. According to one aspect of the present invention, it is an object of the present invention is to provide a method of intersystem communication, a computer, and an interface module program for easily achieving a communication system for providing a computer in an intranet for security protection by using an existing equipment and communication technology which have been constructed on the Internet when constructing an intersystem communication (i.e., communication between applications) by utilizing Internet communication.

To achieve these and other objects, the present invention provides a method of intersystem communication for performing the communication between applications carried out by a plurality of computers provided in a plurality of intranets protected from the Internet by a firewall by carrying out an interface module stored in each computer. According to this method of intersystem communication, the communication transaction performed by the computer by carrying out the interface module includes a step for transmitting a distributing information received from the application via an electronic mail (i.e., e-mail) by specifying a mail address of an addressee and a step for obtaining e-mails sent to its own mail address from a mail server for transmitting the distributing information of the electronic mail to the application.

According to this communication method, the communication transaction between applications is performed by carrying out the interface module by the computer. The distributing information received from the application is transmitted as an e-mail by specifying the mail address of the addressee. In this case, the computer which receives the e-mail (i.e., the computer of the addressee) via the interface carries out the transaction, for example, indicated in the distributing information, by the application. Provided that the distributing information includes the request for returning the transaction result, the data of the transaction result is replied by the e-mail via the interface. The interface of the computer of the addresser obtains the e-mail sent to the own e-mail address from a mail server for transferring the distributing information to the application. Thus, the communication between the applications (i.e., systems) is performed by exchanging the e-mail information via the interfaces. On the other hand, generally, when the intranet is constructed, a pair of mail servers is provided in and out of the intranet which is protected from the Internet by the firewall for allowing the communication from the outside of the firewall to the inside of the firewall. According to the communication methods that the mail server of this kind is not used, different equipment is required for the security protection. Because the communication is performed via the e-mail according to the present invention, the existing equipments and the systems for the electronic mail can be used by performing the communication via the e-mail for introducing the intersystem communication which is relatively easily constructed, is low cost, and includes high security protection. Even when the intranet is constructed with other configurations, the intersystem communication with easy construction, low cost, and high security protection can be introduced by cannibalizing the security protection function for the e-mail.

According to a further aspect of the invention, it is an object of the present invention to provid a method of intersystem communication for performing the communication between applications carried out by a plurality of computers provided in Intranet protected from the Internet by a firewall by carrying out an interface module stored in each computer. According to the method for intersystem communication, the communication transaction performed by carrying out the interface module by each computer includes the following steps of: carrying out an interface module by a first computer of an addresser; transmitting a distributing information received from a first application as an electronic mail by specifying an electronic mail address of an addressee; carrying out an interface module by a second computer of the addressee; monitoring a second mail server in order to learn an arrival of the e-mail sent to an own electronic mail address, and importing the e-mail immediately after learning of the arrival of the e-mail to the own e-mail address by the monitoring of the second mail server; transferring the distributing information of the imported e-mail to a second application; receiving a distributing information responding to the distributing information by the second application for replying as the e-mail by specifying a mail address of the addresser; carrying out the interface module by a first computer of the addresser; monitoring the first mail server in order to learn the arrival of the e-mail sent to the own mail address; importing the e-mail immediately after learning of the arrival of the e-mail sent to the own address by monitoring the first mail server; and transferring the distributing information responded via the imported e-mail to the first application.

According to the present invention, the communication between the applications is performed by carrying out the interface module by each computer. The first computer of the addresser carries out the interface module. The distributing information received from the first application is sent to a specified e-mail of the addressee as an e-mail. The second computer to which the information is sent carries out the interface module and monitors the second mail server in order to learn the arrival of the e-mails sent to the own address. The e-mail is imported immediately after learning of the arrival of the e-mail addressed to the own mail address by monitoring the second mail server. The distributing information of the imported e-mail is transferred to the second application. The second application receives the distributing information responding to the distributing information from the second application for replying as an e-mail by specifying the e-mail address of the addresser. The first computer from which the original information is sent, carries out the interface module and monitors the first mail server in order to learn the arrival of the e-mail sent to the own e-mail address. The e-mail is imported immediately after learning of the arrival of the e-mails to the own e-mail address by monitoring the first mail server. The distributing information responded by the imported reply e-mail is transferred to the first application. Thus, the same effect as foregoing can be obtained according to this object of the present invention.

According to a further aspect of the invention, it is preferable that in the method for intersystem communication, the distributing information is encrypted by the computer before transmission via the e-mail and decrypting the distributing information by the computer obtained from the mail server before being transferred to the application.

According to the foregoing construction, the distributing information is encrypted before being sent via the e-mail via the computer. The distributing information received by the e-mail obtained from the mail server by the computer is decrypted before transferring to the application. Thus, the leakage of the information unlikely happens when the e-mail is obtained by others while being transmitted in the Internet.

According to a further aspect of the invention, another object of the present invention is to provide a computer placed in an Intranet protected from the Internet by a firewall for storing an interface module being carried out for communicating between an application which is carried out by the computer placed in the Intranet and applications which are carried out by other computers placed in other Intranets. The computer includes a transmission means for transmitting the distributing information received from the application as an e-mail by specifying the mail address of an addressee by carrying out the interface module by the computer, an monitoring means for monitoring a mail server in order to learn an arrival of the e-mail to own mail address, a mail obtaining means for downloading the e-mail when learning of the arrival of the e-mail to the own e-mail address in the mail server, and a transfer means for transferring the distributing information transmitted via the downloaded e-mail to the application.

According to this invention, each means is operated as follows by carrying out the interface module by the computer. That is, the distributing information received from the application is transmitted as the e-mail by specifying the mail address of an addressee. The monitoring means by the computer monitors the mail server in order to learn an arrival of the e-mail to own e-mail address. The mail obtaining means of the computer downloads the e-mail when learning of the arrival of the e-mail addressed to the own mail address in the mail server by the monitoring means. The distributing information sent by the downloaded e-mail is transferred to the application by the transfer means of the computer. Thus, by using this computer for the communication between the applications, the intersystem communication with easy construction, low cost, and high security protection can be introduced.

According to a further aspect of the invention, it is preferable that the computer further includes an encryption means for encrypting by the computer the distributing information before being transmitted via the e-mail using the transmission means and a decryption means for decrypting by the computer the distributing information replied via the e-mail and downloaded from the mail server before being transmitted to the application.

According to this invention, the distributing information is encrypted by the encryption means of the computer before being transmitted via e-mail by the transmission means of the computer. The encryption of the distributing information sent via e-mail is decrypted by the decryption means of the computer before the computer transfers the distributing information replied via e-mail which has been downloaded from the mail server to the application. Thus, the leakage of the information unlikely happens when the e-mail is obtained by others while transmitting in the Internet.

According to a further aspect of the invention, it is another object of the present invention to provide an interface module program having instructions to cause the computer to operate for achieving each means included in the computer.

According to this invention, the communication between the applications can be performed by the communication system via the e-mails by carrying out the interface module programs by the computers. Thus, the intersystem communication with easy construction, low cost, and high security protection can be introduced.

According to a further aspect of the invention, it is an object of the present invention to provide an interface module program stored in a first computer in an intranet protected from the Internet by a firewall and carried out by the first and the second computers for performing the communication between the second computer and the application. The interface module program includes the following steps. The first computer transmits the distributing information received from a first application as an e-mail by specifying an e-mail address of an addressee. The second computer monitors a second mail server in order to learn an arrival of the e-mail sent to the own e-mail address. The second computer downloads said e-mail from the second mail server immediately after learning of the arrival of the e-mail to the own e-mail address by monitoring the second mail server. The second computer transmits the distributing information in the downloaded e-mail to the second application. The second application receives a distributing information responding to the distributing information by and from the second application for replying the distributing information via the e-mail by the second computer by specifying a mail address of an addresser. The first computer monitors the first mail server in order to learn the arrival of the e-mail sent to the own mail address. The first computer downloads said e-mail from the first mail server immediately after the arrival of the e-mail to the own e-mail address by monitoring the first mail server. And the first computer transfers the distributing information responded via the downloaded reply e-mail to the first application.

According to this invention, the communication between the applications can be preformed by the communication system of the e-mail by carrying out the interface module program by the computer for performing the communication between the applications. The interface satisfies the function for sending the information and for receiving the information. That is, the distributing information received from the first application of the addresser is transmitted via the e-mail by the first computer by specifying the e-mail address of the addressee. In the interface of the addressee, the second computer monitors the second mail server in order to learn the arrival of the e-mail sent to the own e-mail address. The second computer downloads the e-mail from the second mail server immediately after learning of the arrival of the e-mail to the own e-mail address by monitoring the second mail server. The distributing information of the downloaded e-mail is transferred to the second application by the second computer. A distributing information received from the second application responding to the distributing information is replied via the e-mail by the second computer by specifying the address of the addresser. In the interface of the addresser (i.e., to which the e-mail is replied to), the e-mail is downloaded from the first mail server by the first computer immediately after learning of the arrival of the e-mail to the own e-mail address by monitoring the first mail server. The distribution information in the downloaded reply e-mail is transferred to the first application by the first computer. Thus, by carrying out the interface module programs by the first and the second computers for performing the communication between the applications, the intersystem communication with easy construction, low cost, and high security protection can be introduced.

### BRIEF DESCRIPTION OF THE DRAWINGS

The above mentioned and other objects, features, advantages, technical and industrial significance of this invention will be better understood by reading the following detailed description of preferred embodiments of the invention, when considered in connection with the accompanying drawings, in which:
Fig. 1 is a block diagram of an exemplary communication system according to an embodiment of the present invention;
Fig. 2 is a block diagram showing an exemplary flow of an intersystem communication according to the embodiment of the present invention;
Fig. 3 is an explanatory view for exemplary variations of an operation transaction according to the embodiment of the present invention;
Fig. 4a is a perspective view of exemplary computer aided design (CAD) data according to the embodiment of the present invention;
Fig. 4b is a pattern diagram showing exemplary data of an addition transaction result of the CAD data according to the embodiment of the present invention;
Fig. 4c is a pattern diagram showing exemplary data of a subtraction transaction result of the CAD data according to the embodiment of the present invention; and
Fig. 5 is a block diagram of an exemplary system according to the embodiment of the present invention.

### DETAILED DESCRIPTION OF EXEMPLARY EMBODIMENTS

In the following description and the accompanying drawings, the present invention will be described in more detail with reference to exemplary, preferred embodiment.

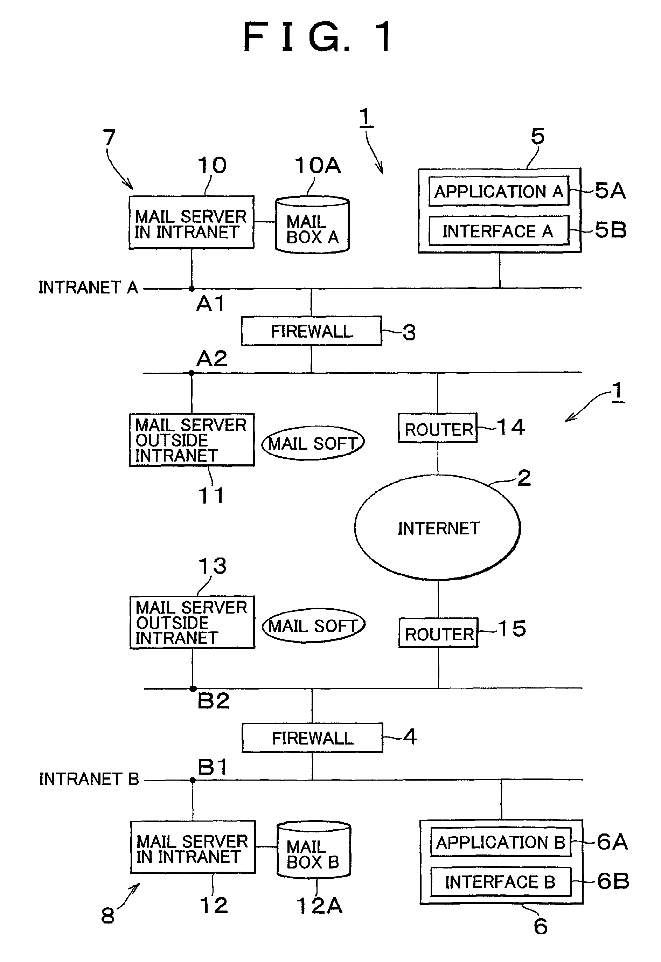

Referring to Figs. 1-5, an embodiment of the present invention will be explained. Fig. 1 shows a transaction system 1 for performing the Internet communication between applications of computers (e.g., personal computers; hereinafter called PC) that are provided in a plurality of Intranets respectively.

An Internet 2 in which the transaction system 1 is constructed is connected to two intranets IntA, IntB, via firewalls 3, 4, respectively. Computers (PC) 5, 6, for performing distributed processing via the Internet communication are placed in the Intranets IntA, IntB, respectively. Electronic mail systems (i.e., hereinafter e-mail system) 7, 8, are constructed for exchanging electronic mail (i.e., hereinafter e-mail) between the computers 5, 6 in the intranets IntA, IntB and other computers outside of the intranet. The e-mail systems 7, 8, are existing systems constructed on the Internet 2. The e-mail system 7 includes a mail server 10 in the Intranet IntA, a mail box 10A, and a mail server 11 which is placed outside of the Intranet IntA. The e-mail system 8 includes a mail server 12 in the Intranet IntB, a mail box 12A, and a mail server 13 which is placed outside of the Intranet IntB.

The mail servers 10, 11 that are placed inside or outside of the intranet IntA include fixed IP addresses A1, A2 respectively. The firewall 3 allows the transmission of the data only from the IP address A2 to the IP address A1 which is in the Intranet IntA. Likewise, the mail servers 12, 13 placed inside or outside of the Intranet IntB include fixed IP addresses B 1, B2. The firewall 4 allows the transmission of the data only from the IP address B2 to the IP address B1 which is in the Intranet IntB. The mail servers 11, 13 are operated by an electronic mail software. The e-mail received from outside of the intranets IntA, IntB are immediately forwarded to corresponding mail servers 10, 12 in the Intranets 10, 12. The mail servers 10, 12 store the e-mail forwarded from the mail servers 11, 13, in the mail boxes 10A, 12A. Thus, because existing e-mail systems 7, 8, are constructed to unlikely allow an invasion to the intranets IntA, IntB from the outside, and the e-mail systems 7, 8 are usually provided when constructing the intranet, additional equipment is not necessarily required. Routers 14, 15, for selecting the transmission route when performing the Internet communication are provided outside of the intranets IntA, IntB.

According to this embodiment, the computers 5, 6, in the Intranet IntA, IntB includes a system for performing distributed processing by two PCs. Each system is constructed by applications (i.e., application programs) 5A, 6A, stored in a memory means such as hard disc of the computers 5, 6, for performing the distributed processing by performing the intersystem communication. In the computers 5, 6, interfaces 5B, 6B, for conducting the communication between the applications (i.e., systems) 5A, 6A, store an interface module program in the memory means such as the hard disc, and the like.

The interface module program performs the communication between the systems (i.e., applications) via e-mail. That is, the interface achieves an e-mail communication system for sending the distributing information of the operation transaction (i.e., command) that the application of the system requests to the application of other systems to the computer of the addressee via e-mail, and for receiving the transaction result of the addressee system by the reply via the e-mail.

Because the interfaces 5B, 6B are constructed only by installing the interface module program to the PC, a transaction requiring high security protection of this embodiment can be easily constructed in the intranet (having the existing e-mail system) by the distribution of the software for the interface through sales. The interface module program may be sold via known media such as CD-ROM. Although the intersystem communication between two PCs is explained in this embodiment for simplifying the explanation, the transaction system for performing the communication among more than three computers can be constructed.

The following discussion assumes that the computer 5 is a terminal (i.e., client) and the computer 6 is a server, and that the distributed processing is performed between the systems by carrying out the operation transaction (i.e., command) requested by the terminal 5 of the computer by the server 6 and returning the operation transaction result to the terminal 5 of the computer. A backbone database DB dealt with by the server 6 stores various data belonging to the trade secret. The terminal 5 of the computer exchanges the information with the server 6 via the Internet communication. The data stored in the database DB can include CAD data of product design drawing for the manufacturer, deposit data for the financial institution such as bank, or data which are required to be protected such as accounting data for the companies. The interfaces 5B, 6B are used as the communication tool for the intersystem communication when a predetermined operation transaction needs to be performed by communicating between systems from a remote while maintaining the security protection of the data with high asset value. The interfaces 5B, 6B, belong to a lower level from the applications 5A, 6A and function as the interface when performing the communication between the applications (i.e., systems).

The contents of the program of the interface will be explained as follows. When designing the applications 5A, 6A, for example, a function used for requesting the communication to the interfaces 5B, 6B is defined in the program. Various commands may be defined besides the function as long as there is a request for the communication of the operation transaction. Requested contents of the server 6 does not necessarily have to be a request for commanding a specific operation transaction by the function (i.e., command), but may be the requested content for simply requesting the necessary data. That is, the only requisite of the distributing information exchanged during the communication between the systems is the information exchanged between the applications, such as the function, the command, program (i.e., such as task), data, etc.

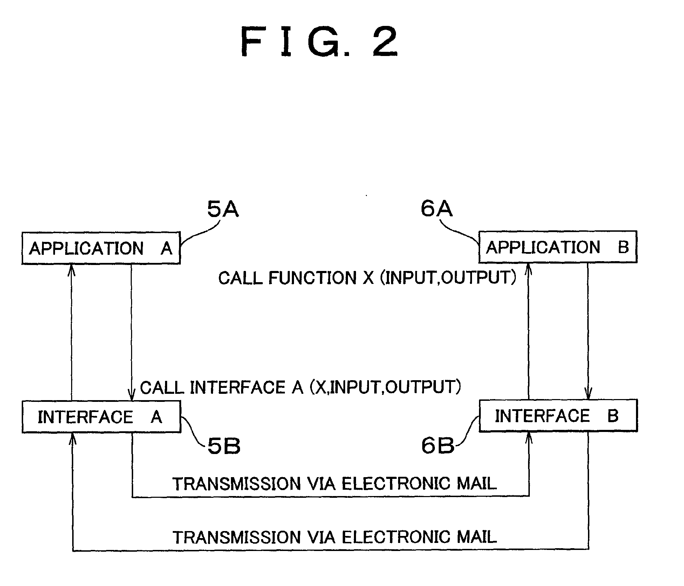

Referring to Fig. 2, the distributed processing regarding the transaction performed in the communication between the applications via the interfaces will be explained. A function for requesting the communication of the operation transaction to the interface 5B is defined in the application 5A. For example, the function "interface A (X, input, output)" is defined. "CALL interface A (X, input, output)" means to request the interface 5B to request the transaction of the "CALL function X (input, output)" to the server 6 via the communication. "Function X (input, output)" is a function for specifying the input and output. For example, "function X (input, output)" specifies the output system of the transaction result obtained from the function "function X" using, for example, the input. The interface 5B interprets the "interface A (X, input, output) received from the application 5A as a request for requesting the transaction of the "Function 'function X (input, output)''' to the server 6 via the communication and requests the foregoing contents to the Interface 6B. The application 6A of the server 6 receiving the request of the operation transaction via the interface 6B follows the request for carrying out the "function 'function X (input, output),''' then for transferring the transaction result to the interface 6B as a response to the request. The interface 6B transmits the data receiving as the response of the request by the communication to the interface 5B, then the interface 5B transmits the receiving data to the application 5A.

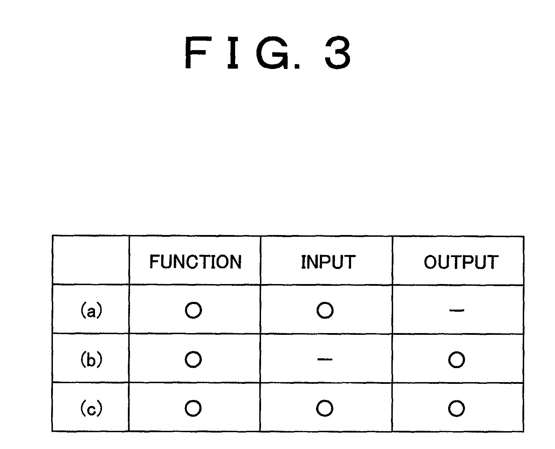

There are mainly three ways, as shown in Fig 3, for requesting the operation transaction. That is, although the function is a requisite when the application 5A requests the operation transaction, it is not necessarily required to specify both the input and output as shown in Fig. 3(c). As shown in Fig. 3(b) and 3(c), there are cases that the output is not specified while only the function and the input are specified (i.e., function X (input)) (shown in Fig. 3(a)) and that the input is not specified while only the function and the output are specified (i.e., function X (output)) (shown in Fig. 3(b)). According to the "function X (input)," a predetermined output can be obtained by determining the input and the function. According to the "function X (output)," a predetermined output can be obtained only by determining the output and the function.

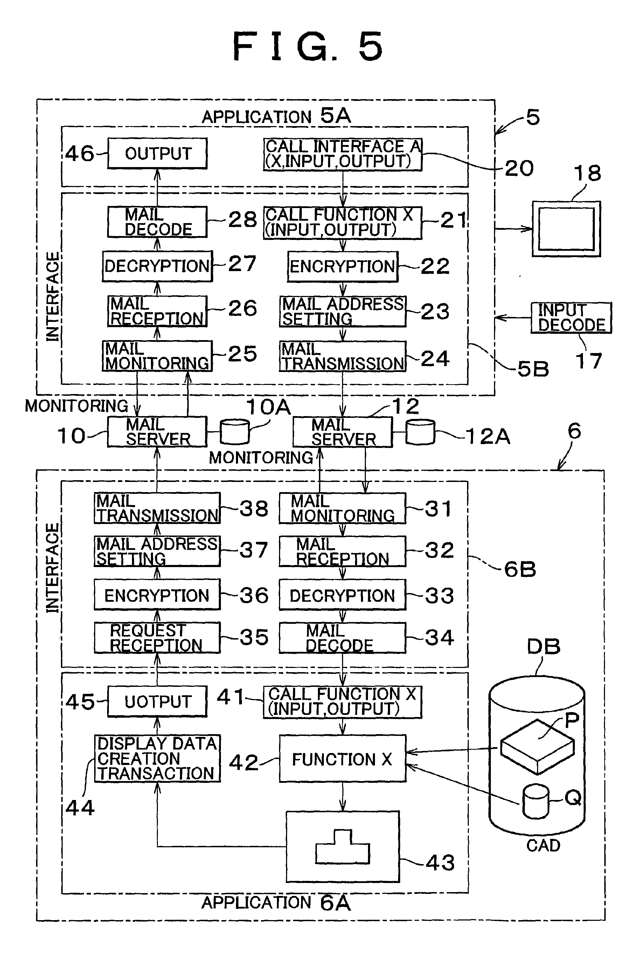

Fig. 5 is the block diagram of the exemplary system showing the details of the interface. According to this embodiment, the system includes the CAD data such as the product design drawing of the company in the database DB of the server 6. The terminal 5 of the computer sends a request to the server 6 for acquiring the data necessary for the transaction for carrying out the application 5A. The server 6 reads-out the CAD data which needs to be input from the database DB in accordance with the request from the terminal 5 of the computer, and replies to the terminal 5 of the computer with the drawing data obtained as the output by performing a predetermined transaction to the CAD data in accordance with the requested function.

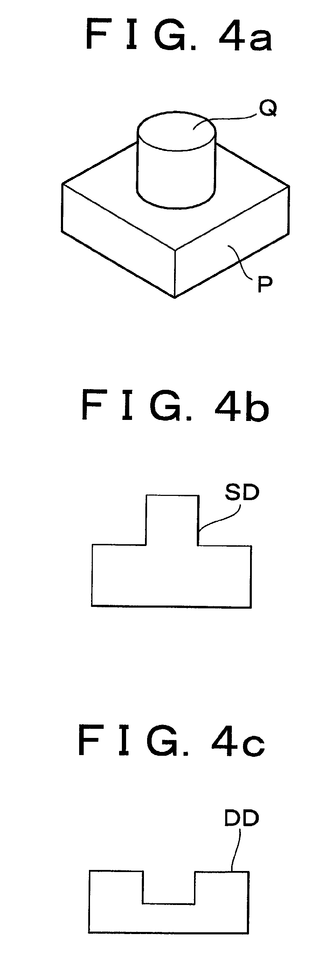

The function "function X" requested as the transaction of the CAD data by the terminal 5 of the computer to the server 6 will be, for example, explained by adopting the addition and subtraction of the CAD data as shown in Figs. 4a-c. As shown in Fig. 4a, there are a cuboid block P and a column block Q shown as three dimensions CAD data. The three-dimension CAD data of these two blocks P, Q, corresponds to the input of the function "function X." When the "function X" corresponds to the addition, as shown in Fig. 4b, the calculation transaction calls a view SD which is drawn with only an outline of the cross-section of the whole shape including the block P and block Q without showing the line where the block P and the block Q are attached each other. On the other hand, when the "function x" corresponds to the subtraction, as shown in Fig 4c, the calculation traction calls a view DD which is drawn with only an outline of the cross-section of a remained bock P viewed from the side by removing the block Q from the assembly of the block P and the block Q. The drawing data of the view SD, DD requires exceptionally smaller memory capacity compared to the three-dimension CAD data.

The terminal 5 of the computer is connected to an input device 17 and a display device 18. For example, when the system is operated by operating the input device 17 in the terminal 5 of the computer, the computer 5 carries out the application 5A.

The function is defined in the program which constructs the application 5A for outputting the request to the interface 5B. The portion corresponding to the portion for defining the function constructs a communication request portion 20 for outputting the request of the communication to the interface 5B. For example, a statement calling for the function saying "CALL interface A (X, input, output)" is transmitted from the communication request portion 20 to the interface 5B.

The interface 5B includes a request reception portion 21 for receiving the statement for calling the function saying "CALL interface A (X, input, output)." The request reception portion 21 decodes the statement for converting into the program system for the application, which is, for example, "CALL function X (input, output)"

The interfaces 5B, 6B receives the operation transaction (such as order) requested from the applications 5A, 6A, specifies the mail address (i.e., IP address) of the server 6 to which the task must be requested, and transmits the operation transaction to the server 6 via the electronic mail. Then, the server 6 conducts the communication for replying with the data of the transaction result of the carried out operation transaction which has been requested via the e-mail. Although the interfaces 5B, 6B are constructed with the same program, the differences regarding the setting contents are generated by the initialization setting according to the application on the installed PC and the setting of the mail address.

The interfaces 5B, 6B adopting the e-mail communication system includes mainly six functions. That is, (1) CALL function of the application (2) encryption function (3) mail transmission function (4) mail monitoring function (5) decryption function, and (6) mail decoding function.

The interfaces 5B, 6B can be set by relating the PC with the e-mail address when exchanging the electronic mail. The user predetermines the e-mail address for using the e-mail for the communication between the systems in the interface 5B, 6B, when constructing the system in the PC. For example, e-mail addresses, "System ComA @XXXXX.co.jp" and "System Com B @XXXXX.co.jp" are set in the interfaces 5b, 6B respectively. These e-mail addresses are used only for the communication between the systems.
(1) The CALL function of the application is the function for receiving the distributing information such as the order requested from the application by the interface and the like. According to this embodiment, the CALL function of the application corresponds to the "CALL" function for calling the interface from the application. For example, the interface receives the request of the communication via the function such as "interface A," recognizes the order shown in this function, and converts the function into another function for the program system of the application. For example, the "interface A (X, input, output) "is converted into the functions interpreted by the application 6A, for example, "function X (input, output)". In the interface 5B, the request reception portion 21 performs this function.
(2) The encryption function is the function for performing the encryption transaction for encrypting the distributing information such as the order which must be carried out by the application of the addressee. The encrypting is performed for making it difficult to decode the contents of the stolen e-mail while the e-mail is transmitted on the Internet 2.
(3) The mail transmission function is the function for transmitting the distributing information such as the operation transaction (i.e., such as order) via the e-mail by specifying the mail address of the addressee. The mail address of the addresser can be included in the e-mail as the data so that the addressee can recognize the mail address of the addresser. The distributing information which is the object of the e-mail transmission can be either attached as the body of the e-mail or as the attachment data.
(4) The mail monitoring function is the function for always monitoring whether there is the arrival of the e-mails indicating the own address in the mail boxes 10A, 12A of the mail servers 10, 12 in the Intranet.
(5) The decryption function is the function for performing the decryption transaction for decoding the encryption of the distributing information transmitted via e-mail by decrypting.
(6) The mail decode function is the function for decoding the decrypted contents of the mail (i.e., distributing information) transmitted to the own mail address via the e-mail. By decoding, the distributing information is transmitted to the applications 5A, 6A. The distributing information transmitted to the application includes the order and data for requesting the operation transaction from the addresser transferred to the application of the addressee and the data of the transaction result obtained by carrying out the request of the operation transaction from the addresser transferred to the application of the addressee.

As mentioned above, the interfaces 5B, 6B are constructed by the same program and the differences between the interfaces 5B and 6B are the difference according to the setting by the user, which is acquired later. The interfaces 5B, 6B share the same function including the aforementioned six basic functions. As shown in Fig. 5, the interface 5B includes the request reception portion 21, the encryption portion 22, a mail address setting portion 23, a mail transmission portion 24, a mail monitoring portion 25, a mail reception portion 26, a decryption portion 27, and a mail decode portion 28. Likewise, the interface 6B includes a mail monitoring portion 31, a mail reception portion 32, a decryption portion 33, a mail decode portion 34, a request reception portion 35, a decryption portion 36, a mail address setting portion 37, and a mail transmission portion 38.

According to this embodiment, the application 6A includes a request reception portion 41 for receiving the request from the interface 6B, a request transaction portion 42 for transacting the request, an output portion 43 for outputting the transaction result (i.e., calculation result), a display data creation transaction portion 44, and an output portion 45 for outputting the final data, which are constructed by the program. The application 5A includes the communication request portion 20 and an output-receiving portion 46 for receiving the output of the transaction result requested by the communication request portion 20, which are constructed by the program. Each portion included in the applications 5A, 6A is constructed with the computers 5, 6, and application programs respectively. Each portion included in the applications 5A, 6A may be varied in accordance with the contents of the program design.

The communication function of the interface will be explained referring to Fig. 5. When the statement "CALL interface A (X, input, output)" for calling the interface 5B exists in the program of the application 5A carried to by the computer 5, the request for the operation transaction is outputted from the communication request portion 20 of the application 5A to the interface 5B to be received by the request reception portion 21 of the interface 5B. The statement corresponds to the order for requesting the server 6 to obtain the output of the function X relative to the specified input and to return the response of the output (i.e. transaction result) via the communication.

The interface 5B decodes the received order in the request reception portion 21 for converting to the program system for the application, for example, to be "CALL function X (input, output)". Then in the encryption portion 22, the distributing information received from the request reception portion 21 is encrypted. The mail address-setting portion 23 specifies the mail address of the server 6 which is the addressee of the encrypted distributing information. The mail transmission portion 24 transmits the e-mail including the distributing information. The transmitted e-mail is sent to the mail server 12 via the Internet 2 and the mail server 13 to be stored in the mail box 12A.

On the other hand, in the interface 6B, the mail monitoring portion 31 always monitors the mail server 12. When the e-mail specified to the own mail address is arrived in the mail box 12A, the e-mail is immediately downloaded from the mail server 12. The downloaded e-mail is transferred to the mail reception portion 32. The mail reception portion 32 transfers the distributing information attached to the e-mail to the decryption portion 33. The decryption portion 33 decrypts the code of the distributing information. The mail decode portion 34 decodes the contents of the decrypted distributing information for transmitting only the distributing information which is required to be transmitted to the application to the application 6A via the program system for the application.

In the application 6A, the request reception portion 41 which has received the request from the interface 6B carries out the statement for calling the function saying "CALL function X (input, output)." For example, provided that the "function X (input, output) requests the addition or subtraction of the three dimension CAD data (blocks P, Q) stored in the database DB, the request transaction portion 42 outputs the drawing data SD (shown in Fig. 4b) to the output portion 43 when the function "function X (input, output)" corresponds to the addition, and the drawing data DD (shown in Fig,. 4c) is outputted to the output portion 43 when the function "function X (input, output)" corresponds to the subtraction. The display data creation transaction portion 44 creates the display data based on the drawing data from the output portion 43 to be transferred to the output portion 45. The output portion 45 transfers the display data to the interface 6B.

In the interface 6B, the request reception portion 35 receives the display data as a response to the request (i.e., order) from the application 6A. The encryption portion 36 encrypts the display data. The mail address-setting portion 37 specifies the mail address of the terminal 5 of the computer for replying to the terminal 5 of the computer of the addresser with the display data which is the distributing information (i.e., transaction result information) of the encrypted response. The mail transmission portion 38 transmits the e-mail including the distributing information (i.e., transaction result information) as the response of the request. The transmitted e-mail is sent to the mail server 10 via the Internet 2 and the mail server 11 to be stored in the mail box 10A.

On the other hand, in the interface 5B, the mail monitoring portion 25 always monitors the mail server 10. When the e-mail specified to the own mail address is arrived in the mail box 10A, the e-mail is immediately downloaded from the e-mail server 10. The downloaded e-mail is transferred to the mail reception portion 26. The mail reception portion 26 transfers the distributing information attached to the e-mail to the decryption portion 27. The decryption portion 27 decrypts the code of the distributing information. The mail decode portion 28 decodes the contents of the decrypted distributing information for transmitting only the distributing information which is required to be sent to the application to the application 5A via the program system for the application. In the application 5A, the output-receiving portion 46 receives the display data as the distributing information as the response to the request. For example, as the execution result of the application 5A, a predetermined drawing figure (e.g., Fig. 4b, 4c) is displayed on a screen of the display device 18 based on the received display data from the server 6.

Although the operation transaction is requested from the terminal 5 of the computer to the server 6 in the foregoing explanation, the same procedure is taken for requesting the operation transaction from the server 6 to the terminal 5 of the computer. Although the computer 5 corresponds to the terminal and the computer 6 corresponds to the server in the foregoing explanation, the positioning of the computers 5, 6 are not limited. The same communication procedure is performed by the interfaces when performing the communication between the applications (i.e., systems) among a plurality of computers, which is more than three. The interface (i.e., interface module program) according to this embodiment can be used for easily guaranteeing the security protection when performing the intersystem communication by providing the server, which has backbone database for storing the various data requiring the security protection, in the Intranet. Thus, the usage of the interface (i.e., interface module program) according to this embodiment is not limited to be used in the computer of the server for dealing with the product design drawing data of the manufacturer, and is varied to be used, for example, for the research data of the research institution and the deposit data of the financial institution such as bank.

Thus, according to the embodiment of the present invention, the following effect can be obtained.
(1) The interfaces (i.e., interface modules) 5B, 6B as communication tools for performing the exchange of the information between the applications 5A, 6A (i.e., intersystem) via the electronic mail are provided. By sending and replaying the distributing information (i.e., order and data) through the e-mail transmission route for performing the distributed processing among a plurality of applications of the PCs, the communication system can be constructed on the existing safe e-mail system via the mail servers 10-13 and thus the relatively high security protections can be guaranteed. Thus, by providing the interfaces 5B, 6B as the communication tools for performing intersystem communication, the existing e-mail system with relatively high security protection can be cannibalized and the communication system with easy construction, low cost, and high security protection can be constructed without constructing new equipment and adopting other software for the security protection for guaranteeing the security protection.
(2) Because the distributing information (i.e., order or data) is encrypted when communicating via the e-mail, the leakage of the data can be exceptionally reduced provided that the distributing information is stolen when being transmitted in the Internet 2.
(3) Because the mail servers 10, 12 are always monitored in order to learn the arrival of the e-mail, the e-mail can be downloaded from the mail boxes 10A, 12A by the interfaces 5B, 6B immediately after the arrival of the e-mails to be transferred to the applications 5A, 6A. The transfer of the distributing information can be performed promptly when sending the e-mail and when replying to the e-mail. Thus, the relatively high-speed transaction can be ensured although the information is transmitted via the transmission route via the mail server.

The method for intersystem communication, computer, and interface module program according to the present invention is not limited to the foregoing embodiment and may be varied as follows.

It is not requisite to encrypt the data transmitted via the electronic mail. Although the information may be leaked in case the data is stolen when the data is not encrypted, the security protection of the database is sufficiently guaranteed because the server having the backbone database is provided in the intranet.

Although the mail server (i.e., mail box) is always monitored and the e-mail is immediately downloaded immediately after the arrival of the e-mail according to the foregoing embodiment, the present invention is not limited to this construction. For example, the mail server may include a delivery function for delivering the e-mail and the e-mail is forwarded (i.e., delivered) to the computer immediately after the arrival of the e-mail to the mail server. In this case, the mail monitoring function is not requisitely required.

The mail server in the intranet and the transaction system may be constructed with a common PC. When the usage is limited to this way, the mail monitoring function corresponds to the function for monitoring the arrival of the e-mail in the PC.

The interface may be used only for obtaining the data from the PC outside of the intranet without using for distributing processing, for performing the communication of the data via the e-mail. In this case, too, the security protection of the data is guaranteed.

The computer is not limited to the PC. The computer may correspond to instruments with a build in computer such as cellular phone and PDA. The requisite condition of the computer is satisfied as long as performing the intersystem communication (i.e., between applications).

Although both computers are provided in the intranet according to the foregoing embodiment, the construction that only the computer requiring higher security protection may be placed in the intranet and the other computer corresponding to the terminal may be placed outside of the intranet, which is not protected by the firewall, may be adopted.

It is not requisite to provide a pair of mail servers by which the communication from the outside of a firewall to the inside of the firewall is allowed, as computers in the intranet. For example, the system for performing the intersystem communication between the computers which are in the different intranets by providing the mail server only in the intranet for directly transmitting the e-mail from outside to the mail server in the intranet via the firewall maybe constructed. According to this system although the security protection performance is slightly declined because the invasion from the outside via the firewall is easier, the transmission speed when transmitting the information via the e-mail is increased, and thus the transaction speed of the application carried out by the distributed processing of a kind between the systems by the computer can be increased.

As described in details as foregoing, according to the embodiment of the present invention, because the communication between the applications (i.e., intersystem communication) among a plurality of the computers is performed via the electronic mail, the security protection is guaranteed by providing the computer in the Intranet, and the communication system with high security protection can be relatively easily constructed by utilizing the existing equipment and the communication technology for the e-mail.

While the invention has been described with reference to preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.

## Claims

1. A method for intersystem communication for performing communication between applications (5A, 6A) on a plurality of computers (5, 6) that include interface modules and are provided in a plurality of first networks (IntA, IntB) that are protected from a second network (2) via a firewall (3, 4), the method comprising the steps of:
transmitting distributing information received from the application (5A, 6A) via electronic mail by using an electronic mail address of an addressee; and
transferring the distributing information of the electronic mail to the application (5A, 6A) by obtaining the electronic mail address of the addressee from a mail server (10, 12).

2. A method for intersystem communication for performing communication between applications (5A, 6A) on a plurality of computers (5, 6) that include interface modules and are provided in a plurality of first networks (IntA, IntB) that are protected from a second network (2) via a firewall (3, 4), the method comprising the steps of:
transmitting through an interface module by a first computer (5) of an addresser a first distributing information received from a first application (5A) via a first electronic mail by using a first electronic mail address of an addressee;
monitoring through an interface module by a second computer (6) of the addressee a second mail server (12) in order to learn of an arrival of the first electronic mail transmitted to the first electronic mail address;
importing the first electronic mail immediately after learning of the arrival of the first electronic mail addressed to the first electronic mail address by monitoring the second mail server; (12);
transferring the first distributing information of the imported first electronic mail to a second application (6A);
receiving a second distributing information from the second application (6A) in response to the first distributing information for replying via a second electronic mail by using a second electronic mail address of the addresser;
monitoring through an interface module by the first computer (5) of the addresser a first mail server (10) in order to learn of the arrival of the second electronic mail transmitted to a second electronic mail address;
importing the second electronic mail immediately after learning of the arrival of the second electronic mail addressed to the second electronic mail address by monitoring the first mail server (10); and
transferring the second distributing information to the first application (5A).

3. A method for intersystem communication according to either one of claim 1-2, **characterized by** further comprising the steps of:
encrypting the distributing information by the computer (5, 6) before transmission via the electronic mail; and
decrypting the distributing information by the computer (5, 6) obtained from the mail server (10, 12) before being transferred to the application (5A, 6A).

4. A method for intersystem communication according to any one of claims 1-3, **characterized in that** the interface modules include a function defined for requesting a communication for an operation transaction.

5. A first computer (5) storing an interface module and provided in a first network (IntA) that is protected from a third network (2) by a firewall (3), the first computer (5) performing communication between applications with a second computer (6) provided in a second network (IntB), the applications (5A, 6A) carried out by the computers, the first computer (5) **characterized by** comprising:
a transmission means for transmitting a distributing information received from an application (5A) via an electronic mail by using an electronic mail address of an addressee by using the interface module of the first computer (5);
an monitoring means for monitoring by the first computer (5) a mail server (10) in order to learn of an arrival of the electronic mail addressed to the electronic mail address;
an obtaining means for downloading by the computer (5) the electronic mail when learning of the arrival of the electronic mail addressed to the electronic mail address to the mail server (10); and
a transfer means for transferring by the computer (5) the distributing information transmitted via the downloaded electronic mail to the application (5A).

6. A computer according to claim 5, **characterized by** further comprising:
an encryption means for encrypting by the computer (5) the distributing information before being transmitted via the electronic mail by the transmission means; and
a decryption means for decrypting by the computer (5) the distributing information replied via the electronic mail and downloaded from the mail server (10) before being transmitted to the application (5A).

7. A computer according to either one of claims 5-6, **characterized in that** the interface module includes a function for requesting a communication of an operation transaction.

8. An interface module program, **characterized by** having instructions to cause a computer (5) to operate as claimed in any one of claims 5-7.

9. An interface module program that is stored in a first computer (5) in a first network (IntA) that is protected from a second network (2) by a firewall (3), and that is used by the first computer (5) and a second computer (6) for communicating between an application (5A) of the first computer (5) and an application (6A) of the second computer (6), the program **characterized by** comprising instructions to:
transmit a first distributing information by the first computer (5) that is received from a first application (5A) by using a first electronic mail address of an addressee;
monitor a second mail server (12) by the second computer (6) in order to learn of an arrival of an electronic mail transmitted to a first electronic mail address;
download the first electronic mail from the second mail server (12) by the second computer (6) immediately after learning of the arrival of the first electronic mail addressed to the first mail address;
transfer the first distributing information by the second computer (6) that is downloaded from the first electronic mail to a second application (6A);
receive a second distributing information from the second application (6A) in response to the first distributing information for replying via a second electronic mail by using a second electronic mail address of an addresser;
monitor the first mail server (10) by the first computer (5) in order to learn of the arrival of the second electronic mail addressed to the second electronic mail address;
download the second electronic mail from the first mail server (10) by the first computer (5) immediately after learning of the arrival of the second electronic mail addressed to the second electronic mail address; and
transfer the second distributing information by the first computer (5) that is downloaded from the second electronic mail to the first application (5A).

10. An interface module program according to claim 9, **characterized by** further comprising an instruction to request a communication for an operation transaction.
